# EUROPÄISCHE PATENTANMELDUNG

(11) **EP 1 985 501 A2**
(43) Veröffentlichungstag der Anmeldung: **29.10.2008**
(21) Anmeldenummer: 08007557.5
(22) Anmeldetag: 18.04.2008
(51) Int. Cl.: B60R 13/00, B60R 13/04

(54) **Kraftfahrzeug-Verkleidungsbaugruppe, Verfahren zur Montage einer derartigen Verkleidungsbaugruppe sowie Kraftfahrzeug-Baugruppe mit einer derartigen Verkleidungsbaugruppe**

(30) Priorität: 28.04.2007 DE 102007020189
(71) Anmelder: Rehau Ag + Co, 95111 Rehau (DE); Richard Fritz Gmbh + Co. Kg, 75434 Besigheim (DE)
(72) Erfinder: Mett, Thomas, 95182 Döhlau (DE); Steeg, Claus-Christian, 08606 Oelsnitz (DE); Lux, Stefan, 95182 Döhlau (DE); Kiriakou, Wassilios, 74376 Gemmrigheim (DE); Haas, Jochen, 71691 Freiberg (DE); Caric, Tihomir, 71034 Böblingen (DE)
(74) Vertreter: Hofmann, Matthias

(57) **Zusammenfassung**

Eine Kraftfahrzeug-Verkleidungsbaugruppe hat einen Haltekörper (4) mit einer Aufnahmenut (6). Der Haltekörper (4) ist an einer Kraftfahrzeug-Heckscheibe (3) in einem dem Fahrzeuginneren zugewandten oberen Scheiben-Randbereich oder an einem Verkleidungsteil in einem dem Fahrzeuginneren zugewandten oberen Verkleidungsteil-Randbereich über eine Haftvermittlerschicht stoffschlüssig festlegbar. Ein Verkleidungsteil (1) der Verkleidungsbaugruppe ist mit einem heckscheibenseitigen Kantenbereich (8) oder die Kraftfahrzeug-Heckscheibe ist mit einem verkleidungsseitigen Kantenbereich in die Aufnahmenut (6) eingesteckt. Eine solche Verkleidungsbaugruppe sowie eine zusätzlich noch die Heckscheibe umfassende Kraftfahrzeug-Baugruppe vermeidet, dass durch sichtbare Befestigungselemente für das Verkleidungsteil die optische Anmutung der Kraftfahrzeug-Sichtseite eingeschränkt wird.

## Beschreibung

Die Erfindung betrifft eine Kraftfahrzeug-Verkleidungsbaugruppe mit einem Verkleidungsteil, das oberhalb einer Heckscheibe des Kraftfahrzeugs anzuordnen ist. Weiterhin betrifft die Erfindung ein Montageverfahren für eine solche Verkleidungsbaugruppe. Ferner betrifft die Erfindung eine Kraftfahrzeug-Baugruppe mit einer derartigen Kraftfahrzeug-Verkleidungsbaugruppe und einer Heckscheibe.

Ein Beispiel für ein derartiges Verkleidungsteil ist ein Heckspoiler oder eine Heckblende. Durch offenkundige Vorbenutzung ist es bekannt, derartige Verkleidungsteile durch Verclipsen, Verschrauben oder Verkleben an der Heckklappe zu befestigen. Hierzu sind in Bauteilen der Heckklappe Befestigungspunkte erforderlich, die direkt an der Heckklappen-Sichtseite angebunden werden müssen. Dies führt oftmals zu einer optischen Beeinträchtigung.

Es ist daher eine Aufgabe der vorliegenden Erfindung, eine Verkleidungsbaugruppe derart weiterzubilden, dass eine Einschränkung der optischen Anmutung der Kraftfahrzeug-Sichtseite durch sichtbare Befestigungselemente für das Verkleidungsteil vermieden ist.

Diese Aufgabe ist erfindungsgemäß gelöst durch eine Verkleidungsbaugruppe mit den im Anspruch 1 angegebenen Merkmalen.

Durch den direkt an der Heckscheibe oder direkt am Verkleidungsteil festlegbaren Haltekörper werden sichtbare Befestigungselemente zur heckscheibenseitigen Befestigung des Verkleidungsteils vermieden. Insbesondere eine Verschraubung des Verkleidungsteils an der Karosserie im Bereich einer Heckklappe entfällt hierdurch. Der Haltekörper kann zudem eine thermische Ausdehnung des Verkleidungsteils relativ zu benachbarten Elementen ausgleichen. Da die heckscheibenseitige Verbindung des Verkleidungsteils oder die verkleidungsseitige Verbindung der Heckscheibe durch Einstecken erfolgt, verringert sich der Aufwand bei der Montage der Verkleidungsbaugruppe. Auch ein nachträglicher Fügeprozess des heckscheibenseitigen Verkleidungsteils mit einem Trägerteil des Kraftfahrzeugs, also mit einem Karosserieelement, entfällt. Das Verkleidungsteil ist ein Teil der Kraftfahrzeug-Karosserie, also Teil des Fahrzeugaufbaus. Soweit das Verkleidungsteil mit dem heckscheibenseitigen Kantenbereich in die Aufnahmenut eingesteckt ist, erfolgt dies insbesondere derart, dass das Verkleidungsteil die Kraftfahrzeug-Heckscheibe im heckscheibenseitigen Kantenbereich hintergreift. In diesem Falle sind auf der Heckscheibe keine Befestigungselemente sichtbar, was zu einer Verbesserung der optischen Anmutung des Kraftfahrzeugs führen kann.

Ein angespritzter Haltekörper nach Anspruch 2 führt zu einer sauberen und sicheren Festlegung des Haltekörpers an die Heckscheibe oder das Verkleidungsteil.

Eine Anlagewand des Haltekörpers nach Anspruch 3 gewährleistet eine definierte Anlage des Haltekörpers am Karosserieelement des Kraftfahrzeugs.

Eine Schraubverbindung nach Anspruch 4 ermöglicht insbesondere eine unaufwändige Demontage des Verkleidungsteils.

Materialien für den Haltekörper nach Anspruch 5 haben sich zur Schaffung einer sicheren und dichten Verbindung des Verkleidungsteils mit der Heckscheibe als besonders geeignet herausgestellt.

Dichtlippen nach Anspruch 6 verbessern die dichtende und sichere Verbindung des Verkleidungsteils mit dem Haltekörper bzw. mit der Heckscheibe.

Ein zweiteiliger Haltekörper-Aufbau nach Anspruch 7 vereinfacht die Herstellung des Haltekörpers. Die einzelnen Haltekörper-Teile können mit geringerem Aufwand hergestellt werden. Das zweite Haltekörper-Teil kann insbesondere als Extrudat vorgefertigt sein.

Eine weitere Aufgabe der Erfindung ist es, ein Verfahren zur Montage einer Verkleidungsbaugruppe mit einem Verkleidungsteil am Übergang zwischen einer Heckscheibe und einem Dachbereich eines Kraftfahrzeugs anzugeben.

Diese Aufgabe ist erfindungsgemäß gelöst durch ein Verfahren nach Anspruch 8.

Ein derartiges Verfahren kann so vorbereitet werden, dass keine zusätzlichen Befestigungsmittel erforderlich sind. Dieses Verfahren ist daher besonders gut für eine Fließband- bzw. Massenfertigung geeignet.

Die Vorteile der Verfahrensweiterbildungen nach den Ansprüchen 9 bis 13 entsprechen denen, die vorstehend schon unter Bezug auf die Verkleidungsbaugruppe diskutiert wurden.

Eine mit dem Karosserieelement verklebte Heckscheibe nach Anspruch 10 gewährleistet eine saubere Krafteinleitung von Kräften, die auf das Verkleidungsteil und die Heckscheibe wirken, hin zum Karosserieelement.

Ein Verkleben eines dachseitigen Abschnitts des Verkleidungsteils mit dem Karosserieelement nach Anspruch 11 ermöglicht eine besonders einfache Montage des Verkleidungsteils.

Eine Verschraubung des dachseitigen Abschnitts des Verkleidungsteils mit dem Karosserieelement nach Anspruch 12 erleichtert dessen Demontage.

Die Vorteile einer Kraftfahrzeug-Baugruppe nach Anspruch 14 entsprechen denen, die vorstehend unter Bezugnahme auf die Verkleidungsbaugruppe sowie ihre Montage diskutiert wurden.

Ausführungsbeispiele der Erfindung werden nachfolgend anhand der Zeichnung näher erläutert. In dieser zeigen:
- Fig. 1: schematisch eine perspektivische Ansicht teilweise in Explosionsdarstellung einer Kraftfahrzeug-Heckklappe mit einer Heckscheibe und einem Kraftfahrzeugs-Verkleidungsteil;
- Fig. 2: einen ausschnittsweise und vergrößert dargestellten Querschnitt der Heckklappe gemäß Linie II-II in Fig. 1;
- Fig. 3: eine Ausschnittsvergrößerung aus Fig. 2;
- Fig. 4: einen entsprechend Fig. 2 ausschnittsweise dargestellten Querschnitt einer abgewandelten Verbindungsstelle zwischen Heckklappe und Verkleidungsteil; und
- Fig. 5 bis 7: zu Fig. 2 ähnliche Darstellungen weiterer Ausführungsformen von Kraftfahrzeug-Verkleidungsbaugruppen.

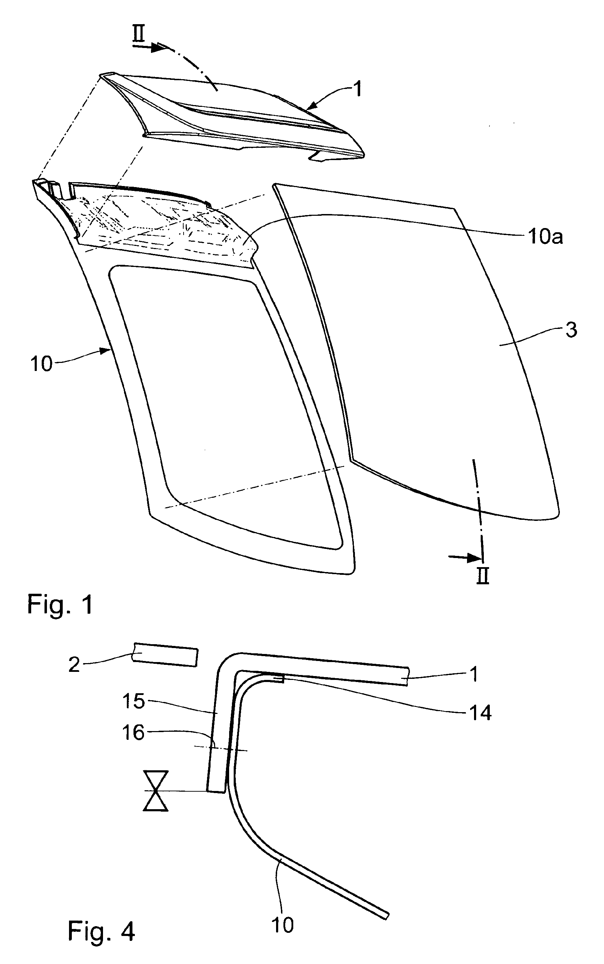

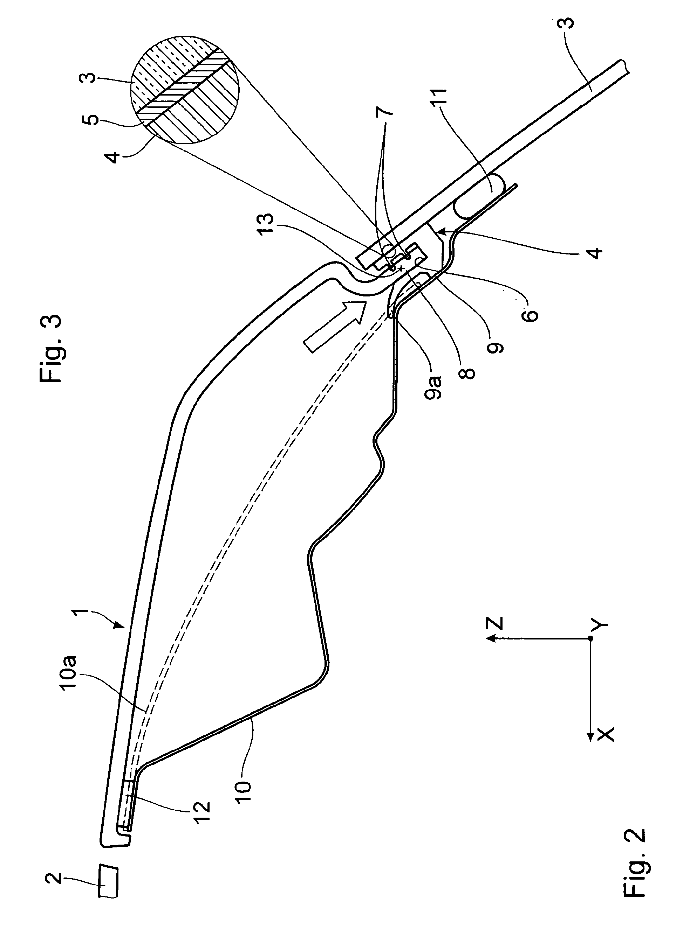

Fig. 1 zeigt ein Verkleidungsteil 1 eines Kraftfahrzeugs am Beispiel einer Heckblende als Teil einer Kraftfahrzeug-Heckklappe. Das Verkleidungsteil 1 ist Bestandteil einer im Querschnitt der Fig. 2 dargestellten Kraftfahrzeug-Verkleidungsbaugruppe. Das Verkleidungsteil 1 ist Teil einer Karosserie des Kraftfahrzeugs. Das Verkleidungsteil 1 ist aus Kunststoff. Das Kraftfahrzeug hat dabei eine Form, bei der ein Dachbereich 2 rückseitig in eine Heckscheibe 3 übergeht, ohne dass hierauf eine Limousinen-Stufe folgt. Beispiele für derartige Kraftfahrzeugformen sind ein SUV, ein Kombi, ein Van oder ein Kompaktfahrzeug. Das Verkleidungsteil 1 sorgt dabei für einen strömungsgünstigen Übergang zwischen dem Dachbereich 2 und der Heckscheibe 3. Dies ist in der Schnittdarstellung nach Fig. 2 veranschaulicht. Der Schnitt nach Fig. 2 ist in einer XZ-Ebene eines Kartesischen XYZ-Koordinatensystems geführt, wobei X die Fahrtrichtung darstellt und Z die Normale auf eine Fahrbahn.

An der Heckscheibe 3 ist ein Haltekörper 4 angespritzt. Wie die Ausschnittsvergrößerung nach Fig. 3 zeigt, liegt der Haltekörper 4 über eine Haftvermittlerschicht 5 an einem inneren oberen Scheiben-Randbereich der Heckscheibe 3 an und ist an dieser über die Haftvermittlerschicht 5 stoffschlüssig festgelegt. Der Haltekörper 4 ist aus einem thermoplastischen Elastomer (TPE) oder aus einem Polyurethan (PU) mit einer Shorehärte zwischen 30 und 65 A.

Parallel zum oberen Scheiben-Randbereich hat der Haltekörper 4 eine sich in der Fig. 2 nach links oben öffnende Aufnahmenut 6. Letztere ist bei montierter Verkleidungsbaugruppe vom oberen Scheiben-Randbereich der Heckscheibe 3 vollständig verdeckt. Die Aufnahmenut 6 hat zwei längs der Aufnahmenut 6 verlaufende Dichtlippen 7, die in der Fig. 2 in einer entspannten, nicht komprimierten Position dargestellt sind. In die Aufnahmenut 6 eingesteckt ist ein heckscheibenseitiger Kantenbereich 8 des Verkleidungsteils 1.

Über eine dem Innenraum des Kraftfahrzeugs zugewandte Anlagewand 9 liegt der Haltekörper 4 an einem heckscheibenseitigen Karosserieelement 10, z. B. dem Innenblech einer Heckklappe (vgl. Fig. 1), an. Von diesem Heckklappen-Innenblech 10 ist in der Fig. 2 ein Abschnitt dargestellt, der nachfolgend ebenfalls als Karosserieelement 10 bezeichnet wird. Die Anlagewand 9 ist einem Nutgrund der Aufnahmenut 6 benachbart, sodass Druck, der auf die Anlagewand 9 ausgeübt wird, praktisch zu keiner Deformation der Aufnahmenut 6 führt. Eine Dichtlippe 9a dichtet den Haltekörper 4 gegen das Karosserieelement 10 ab. Über eine Kleberaupe 11 ist die Heckscheibe 3 unterhalb des Haltekörpers 4 mit dem Karosserieelement 10 verklebt. Über ein doppelseitig wirkendes Klebeband 12 ist das Verkleidungsteil 1 mit einem dachseitigen Abschnitt des Karosserieelements 10 verklebt.

Das Karosserieelement 10 kann auch mehrlagig ausgeführt sein. In der Fig. 2 ist gestrichelt eine zweite Lage 10a eines derartig zweilagigen Karosserieelements dargestellt. Bei der zweiten Lage 10a handelt es sich z. B. um ein Heckklappen-Außenblech, das mit dem Innenblech verschweißt ist. In diesem Fall kann die Verklebung des Verkleidungsteils 1 mit dem dachseitigen Abschnitt des Karosserieelements 10 auch über das Element 10a erfolgen. Zudem kann die Anlage des Haltekörpers 4 am Karosserieelement 10 über die Anlagewand 9 am Element 10a erfolgen. Schließlich ist es denkbar, dass das Karosserieelement 10 mit der Heckscheibe 3 über das Element 10a verklebt ist.

Die Verkleidungsbaugruppe wird am Kraftfahrzeug folgendermaßen montiert: Zunächst wird der Haltekörper 4 an den oberen Scheiben-Randbereich der Heckscheibe 3 angespritzt. Dann wird die Heckscheibe 3 mit dem Karosserieelement 10 über die Kleberaupe 11 verbunden, wobei der Haltekörper 4 über die Anlagewand 9 in Anlage an das Karosserieelement 10 kommt. Sodann wird das Verkleidungsteil 1 in die Aufnahmenut 6 des Haltekörpers 4 eingesteckt. Beim Einstecken des Kantenbereichs 8 in die Aufnahmenut 6 verformen sich die Dichtlippen 8 elastisch und sorgen für eine sichere und dichte Verbindung des Verkleidungsteils 1 an der Heckscheibe 3. Der heckscheibenseitige Kantenbereich 8 des Verkleidungsteils 1, der in die Aufnahmenut 6 eingesteckt wird, und die Aufnahmenut 6 selbst können zueinander komplementäre Positionselemente, z. B. Positioniernuten und hierzu passende Positionierrippen, aufweisen, so dass beim Einstecken des Verkleidungsteils 1 in die Aufnahmenut 6 dessen Y-Position eindeutig definiert ist. Sodann wird das Verkleidungsteil um eine längs der Aufnahmenut 6 verlaufende Schwenkachse 13 verschwenkt, bis das Verkleidungsteil 1 dachseitig von oben her in Anlage mit dem dachseitigen Abschnitt des Karosserieelements 10 kommt. Schließlich wird der dachseitige, also vom heckscheibenseitigen Kantenbereich 8 entfernt gelegene Abschnitt des Verkleidungsteils 1 mit dem dachseitigen Abschnitt des Karosserieelements 10 über das Klebeband 12 verbunden.

Das Festlegen bzw. Befestigen des Haltekörpers 4 an der Heckscheibe 3 kann auch in anderer Weise als durch Anspritzen erfolgen, z. B. durch Verkleben. Das Verbinden des dachseitigen Abschnitts des Verkleidungsteils 1 mit dem Karosserieelement 10 kann ebenfalls auch in anderer Weise erfolgen. Hierzu ist in der Fig. 4 eine Variante der dachseitigen Verbindung des Verkleidungsteils 1 mit dem Karosserieelement 10 dargestellt. Das Karosserieelement 10 ist dachseitig nach oben, also in Z-Richtung, hochgezogen und weist an seinem dachseitigen freien Ende einen nochmals um 90° umgebogenen Endabschnitt 14 auf. Letzterer dient als Anschlag zur definierten Positionierung des Verkleidungsteils 1 relativ zum dachseitigen Abschnitt des Karosserieelements 10. Sobald der Endabschnitt 14 innen am dachseitigen Abschnitt des Verkleidungsteils 1 anliegt, fluchten Schrauböffnungen, die einerseits im Karosserieelement 10 und andererseits in einem zum Fahrzeuginneren hin um 90° einwärts heruntergezogenen Kantenbereich 15 des Verkleidungsteils 1 einerseits vorliegen, so dass dort eine Verschraubung 16 ausgeführt werden kann.

Wenn das Verkleidungsteil 1 in negativer Z-Richtung, also nach unten, belastet wird, stützt sich das Verkleidungsteil 1 einerseits über den Haltekörper 4 und andererseits über das Klebeband 12 bzw. den dem dachseitigen Abschnitt des Karosserieelements 10 benachbarten Randbereich am Karosserieelement 10 ab.

Ein dem Endabschnitt 14 entsprechender Anschlag kann alternativ auch am Verkleidungsteil 1 vorgesehen sein.

Der dachseitige Abschnitt des Verkleidungsteils 1 kann mit dem dachseitigen Abschnitt des Karosserieelements 10 auch verclipst werden. Hierzu weisen die dachseitigen Abschnitte des Verkleidungsteils 1 einerseits und des Karosserieelements 10 andererseits zueinander komplementäre Rastabschnitte auf.

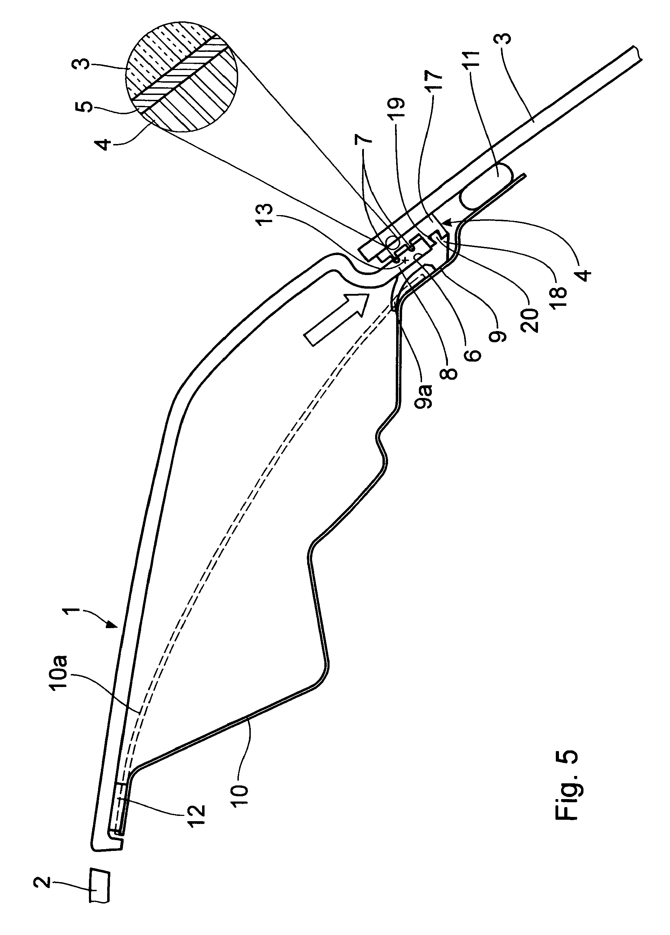

Fig. 5 zeigt eine weitere Ausführung einer Verkleidungs-Baugruppe in einer zu Fig. 2 inklusive der Ausschnittsvergrößerung nach Fig. 3 ähnlichen Darstellung. Komponenten, die denjenigen entsprechen, die vorstehend schon unter Bezugnahme auf die Ausführung nach den Fig. 1 bis 3 erläutert wurden, tragen die gleichen Bezugsziffern und werden nicht nochmals im Einzelnen diskutiert. Bei der Ausführung nach Fig. 5 ist der Haltekörper 4 zweiteilig und hat neben einem heckscheibenseitigen ersten Haltekörper-Teil 17, welches über die Haftvermittlerschicht 5 stoffschlüssig mit der Heckscheibe 3 verbunden ist, noch ein zweites Haltekörper-Teil 18. Über eine rastende Nut/Feder-Verbindung 19, 20 sind die beiden Halteköiper-Teile 17, 18 formschlüssig durch Einknüpfen miteinander verbunden. Das erste Haltekörper-Teil 17 hat dabei die Nut 19 und das zweite Haltekörper-Teil 18 die Feder 20. Beide Haltekörper-Teile 17, 18 miteinander ergeben genau die Raumform des Haltekörpers 4 in der Ausführung nach Fig. 2.

Beim Montieren der Verkleidungsbaugruppe nach Fig. 5 wird vor dem Einstecken des Verkleidungsteils 1 in die Aufnahmenut 6 des Haltekörpers 4 das zweite Haltekörper-Teil 18 am ersten Haltekörper-Teil 17 eingeknüpft.

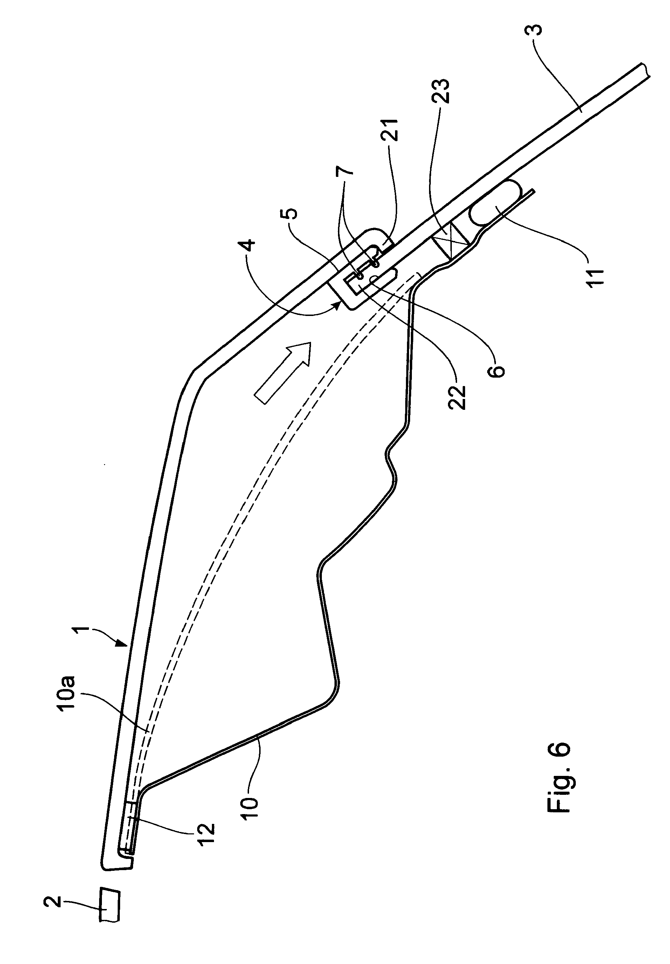

Fig. 6 zeigt eine weitere Ausführungsform einer Verkleidungsgruppe in einer zu Fig. 2 ähnlichen Darstellung. Komponenten, die denjenigen entsprechen, die vorstehend schon unter Bezugnahme auf die Fig. 1 bis 5 erläutert wurden, tragen die gleichen Bezugsziffern und werden nicht nochmals im Einzelnen diskutiert.

Bei der Ausführung nach Fig. 6 ist der Haltekörper stoffschlüssig nicht an der Heckscheibe 3, sondern am Verkleidungsteil 1 befestigt. Die Befestigung erfolgt dabei an einem dem Inneren des Kraftfahrzeugs zugewandten unteren Verkleidungs-Randbereich benachbart zu einer auf die Heckscheibe 3 zu um 90 ° abgewinkelten Abschlusskante 21 des Verkleidungsteils 1. Die Heckscheibe 3 ist mit einem verkleidungsseitigen Kantenbereich 22 in die Aufnahmenut 6 des Haltekörpers 4 eingesteckt.

Zwischen dem Verbindungsbereich des Verkleidungsteils 1 mit der Heckscheibe 3 über den Haltekörper 4 und der Kleberaupe 11 ist noch ein Distanzhalter 23 angeordnet, der die Heckscheibe 3 auf Abstand zum Karosserieelement 10 hält und insbesondere vermeidet, dass der Haltekörper 4 an der zweiten Lage 10a des Karosserieelements anliegt.

Das Montageverfahren der Verkleidungsbaugruppe nach Fig. 6 erfolgt analog zu dem, welches vorstehend anhand der Fig. 1 bis 4 schon erläutert wurde. Der Haltekörper 4 wird bei der Ausführung nach Fig. 6 am Verkleidungsteil 1 durch Verkleben über die Haftvermittlerschicht 5 befestigt. Bei der Ausführung nach Fig. 6 wird der mit dem Verkleidungsteil 1 verbundene Haltekörper 4 mit seiner Aufnahmenut 6 auf den dieser zugewandten Randbereich der Heckscheibe 3 aufgesteckt. Anschließend wird der dachseitige Abschnitt des Verkleidungsteils 1 mit dem Klebeband 12 am Karosserieelement 10 angelegt.

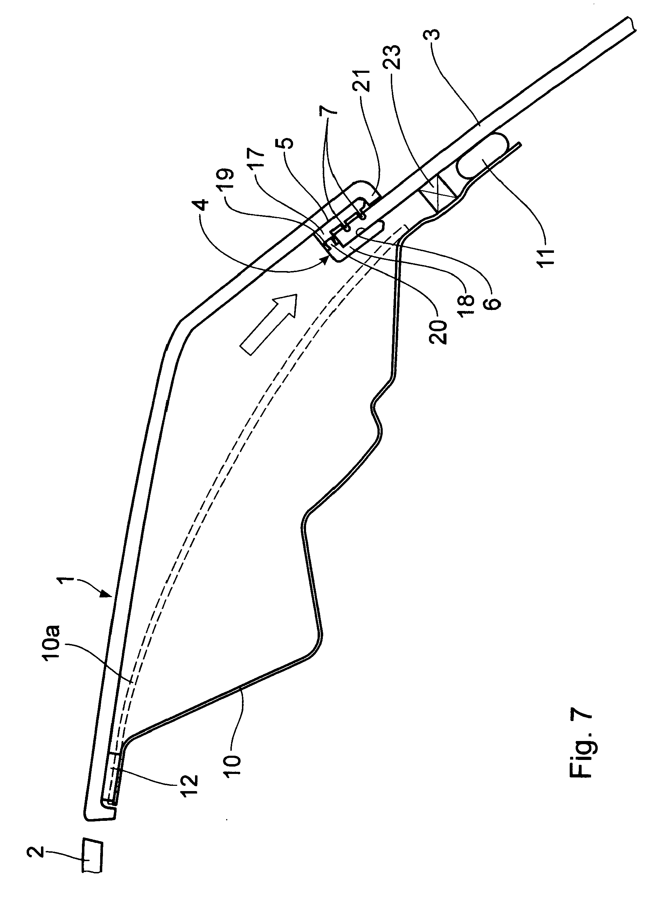

Fig. 7 zeigt eine weitere Ausführung einer Verkleidungsbaugruppe in einer zu Fig. 6 ähnlichen Darstellung. Komponenten, die denjenigen entsprechen, die vorstehend schon unter Bezugnahme auf die Fig. 6 erläutert wurden, tragen die gleichen Bezugsziffern und werden nicht nochmals im Einzelnen diskutiert.

Im Unterschied zur Ausführung nach Fig. 6 ist der Haltekörper 4 bei der Ausführung nach der Fig. 7 zweiteilig, vergleichbar zur Ausführung des Haltekörpers 4 nach Fig. 5. Das erste Haltekörper-Teil 17 des Haltekörpers 4 nach Fig. 7 ist stoffschlüssig über die Haftvermittlerschicht 5 mit dem Verkleidungsteil 1 verbunden. Das zweite Haltekörper-Teil 18 des Haltekörpers 4 nach Fig. 7 ist über die Nut/Feder-Verbindung 19, 20 formschlüssig mit dem ersten Haltekörper-Teil 17 verbunden und begrenzt mit diesem die Aufnahmenut 6. Vor dem Aufstecken des Verkleidungsteils 1 auf die Heckscheibe 3 wird bei der Ausführung nach Fig. 7 das zweite Haltekörper-Teil 18 am ersten Haltekörper-Teil 17 über die Nut/Feder-Verbindung 19, 20 eingeknüpft.

## Patentansprüche

1. Kraftfahrzeug-Verkleidungsbaugruppe
- mit einem Haltekörper (4), der eine Aufnahmenut (6) aufweist,
- mit einem Verkleidungsteil (1) als Teil einer Kraftfahrzeug-Karosserie,
- wobei der Haltekörper (4)
-- an einer Kraftfahrzeug-Heckscheibe (3) in einem dem Fahrzeuginneren zugewandten oberen Scheiben-Randbereich oder
-- am Verkleidungsteil (1) in einem dem Fahrzeuginneren zugewandten oberen Verkleidungsteil-Randbereich
stoffschlüssig festlegbar ist,
- wobei das Verkleidungsteil (1) mit einem heckscheibenseitigen Kantenbereich oder die Kraftfahrzeug-Heckscheibe (3) mit einem verkleidungsseitigen Kantenbereich in die Aufnahmenut (6) eingesteckt ist.

2. Verkleidungsbaugruppe nach Anspruch 1, **dadurch gekennzeichnet, dass** der Haltekörper (4) an die Heckscheibe (3) anspritzbar oder an das Verkleidungsteil (1) angespritzt ist.

3. Verkleidungsbaugruppe nach Anspruch 1 oder 2, **dadurch gekennzeichnet, dass** der Haltekörper (4) eine Anlagewand (9) zur Anlage an ein heckscheibenseitiges Karosserieelement (10) des Kraftfahrzeugs aufweist.

4. Verkleidungsbaugruppe nach einem der Ansprüche 1 bis 3, **dadurch gekennzeichnet, dass** das Verkleidungsteil über eine Schraubverbindung (16) mit einem dachseitigen Karosserieelement (10) verbindbar ist, wobei das Verkleidungsteil (1) und/oder das Karosserieelement einen Anschlag (14) zur definierten Positionierung des Verkleidungsteils (1) zum dachseitigen Karosserieelement (10) aufweist.

5. Verkleidungsbaugruppe nach einem der Ansprüche 1 bis **4, dadurch gekennzeichnet, dass** der Haltekörper (4) aus einem thermoplastischen Elastomer (TPE) oder einem Polyurethan (PU) mit einer Shorehärte von 30 bis 65 A gefertigt ist.

6. Verkleidungsbaugruppe nach einem der Ansprüche 1 bis 5, **dadurch gekennzeichnet, dass** der Haltekörper (4) mindestens eine in der Aufnahmenut (6) längs verlaufende Dichtlippe (7) zur Anlage am Verkleidungsteil (1) und/oder an der Heckscheibe (3) aufweist.

7. Verkleidungsbaugruppe nach einem der Ansprüche 1 bis 6, **dadurch gekennzeichnet, dass** der Haltekörper (4) zweiteilig (17, 18) ist, wobei
- ein erstes Haltekörper-Teil (17) stoffschlüssig mit der Kraftfahrzeug-Heckscheibe (3) oder dem Verkleidungsteil (1) verbunden ist,
- ein zweites Haltekörper-Teil (18), welches mit dem ersten Haltekörper-Teil (17) die Aufnahmenut (6) begrenzt, mit dem ersten Haltekörper-Teil (17) formschlüssig verbunden ist.

8. Verfahren zur Montage einer Verkleidungsbaugruppe nach einem der Ansprüche 1 bis 6 an einem Kraftfahrzeug mit folgenden Schritten:
- Befestigen des Haltekörpers (4) an der Heckscheibe (3) oder am Verkleidungsteil (1),
- Verbinden der Heckscheibe (3) mit einem heckscheibenseitigen Karosserieelement (10) des Kraftfahrzeugs,
- Einstecken des Verkleidungsteils (1) oder der Heckscheibe (3) in die Aufnahmenut (6) des Haltekörpers (4),
- Verschwenken des Verkleidungsteils (1) um eine längs der Aufnahmenut (6) verlaufende Schwenkachse (13), bis das Verkleidungsteil (1) in Anlage mit einem dachseitigen Abschnitt des Karosserieelements (10) kommt,
- Verbinden eines dachseitigen Abschnitts des Verkleidungsteils (1) mit dem dachseitigen Abschnitt des Karosserieelements (10).

9. Verfahren nach Anspruch 8, **dadurch gekennzeichnet, dass** das Befestigen des Haltekörpers (4) an der Heckscheibe (3) oder am Verkleidungsteil (1) durch Anspritzen des Haltekörpers (4) an der Heckscheibe (3) oder am Verkleidungsteil (1) erfolgt.

10. Verfahren nach Anspruch 8 oder 9, **dadurch gekennzeichnet, dass** das Verbinden der Heckscheibe (3) am Karosserieelement (10) durch Verkleben erfolgt.

11. Verfahren nach einem der Ansprüche 8 bis 10, **dadurch gekennzeichnet, dass** das Verbinden des dachseitigen Abschnitts des Verkleidungsteils (1) mit dem dachseitigen Abschnitt des Karosserieelements (10) durch Verkleben erfolgt.

12. Verfahren nach einem der Ansprüche 8 bis 10, **dadurch gekennzeichnet, dass** das Verbinden des dachseitigen Abschnitts des Verkleidungsteils (1) mit dem dachseitigen Abschnitts des Karosserieelements (10) durch Verschrauben erfolgt.

13. Verfahren nach einem der Ansprüche 8 bis 12 zur Montage einer Verkleidungsbaugruppe nach Anspruch 7, **dadurch gekennzeichnet, dass** vor dem Zusammenfügen von Heckscheibe (3) und Verkleidungsteil (1) ein Einknüpfen des zweiten Haltekörper-Teils (18) am ersten Haltekörper-Teil (17) erfolgt.

14. Kraftfahrzeug-Baugruppe mit einer Kraftfahrzeug-Verkleidungsbaugruppe nach einem der Ansprüche 1 bis 7 und einer hiermit verbundenen Heckscheibe (3).
